# EUROPEAN PATENT APPLICATION

(11) **EP 0 712 108 A1**
(43) Date of publication of application: **15.05.1996**
(21) Application number: 94916427.1
(22) Date of filing: 31.05.1994
(51) Int. Cl.: G09G 1/00, G09G 5/00

(54) **PROTECTIVE DEVICE FOR A DISPLAY UNIT AND PROTECTING METHOD**

(71) Applicant: MELCO INC., Nagoya-shi, Aichi-ken 460 (JP)
(72) Inventor: SUWA, Tatsuya, Nagoya-shi Aichi-ken 460 (JP)
(74) Representative: Tomlinson, Kerry John
(86) International application number: JP9400872
(87) International publication number: WO9533254

(57) **Abstract**

Conventional burning preventive devices and preventive methods proposed are to detect no input from a keyboard or a mouse to the computer for a predetermined period of time and to decrease brightness of a screen or to darken the screen leaving small display area and to change the display area or the shape from time to time. However, the burning preventive function is activated if the keyboard or the mouse has not been touched for a long period of time, such as installation of a large volume software or replaying of moving pictures.

Therefore, not by monitoring the operations of a keyboard and a mouse but by judging whether a predetermined time has passed without the screen plotting process routine being called (step S70), and if the predetermined time has expired without the screen plotting routine being called, that is, without rewriting of the screen, a predetermined value is written at the register of CRTC 22 and the image signals are lost to prevent burning at the CRT display device 50; moreover, frequencies of the horizontal synchronizing signal and the vertical synchronizing signal are decreased, and if the CRT display device 50 side also has a power-saving function based on the frequencies of the synchronizing signal, the power consumption by the CRT display device 50 is decreased in cooperation with this.

## Description

### BACKGROUND OF THE INVENTION

### Field of the Invention

The present invention relates to a protective device for a display device to elongate the service life or reduce power consumption of the display devices, such as a CRT which is a general output device for computers.

### Description of the Related Art

With remarkable improvements in the processing capacity of computers in recent years, their display devices (various types of displays) have become larger and of higher resolution. Impressed voltage on the electron gun have become higher according to the increase in the size of displays, and the problems of degradation of fluorescent material and larger power consumption have been focused on. To cope with such problem as above, a variety of screen saver softwares to prevent screens of display devices from being burned and the display devices equipped with power-saving functions have been devised.

In case of no input from an input device, such as a keyboard or a mouse, for a predetermined period of time, screen savers judge that display on the display devices is not needed; and then some screen savers decrease brightness of a CRT display and some switch the display to a mode where only small moving patterns are displayed.

Some examples of the display device equipped with a power saving function are those which conform to the Energy Star Computer Program that has been published by the Environmental Protection Agency of the USA. They are equipped with a power saving function where power consumption is reduced by shutting down the power supply to the display device circuit, except the supply for some part of the circuit, if a horizontal or vertical synchronizing signal is under predetermined frequency and if the video signal is "BLANKED (the dark state)". This function is activated through setting the horizontal or vertical synchronizing signal as under predetermined frequency and setting the video signal as "BLANKED", in the same way as the above-described screen savers do, if the computer side judges there has been no input from an input device for the predetermined period of time and if it judges that there is no need of display on the display device.

However, the display devices equipped with a screen saver or a power-saving function as described above have a problem that burning preventive function is activated even when display on the display device is needed so long as there is no input from the keyboard or the mouse for the predetermined period of time. For example, since the keyboard is not usually used during installation of a large-volume application software from a flexible disk drive (FDD) or while replaying moving pictures or continuously replaying still pictures with use of a large capacity device, such as a CD-ROM, the screen saver or the power-saving device is sometimes activated.

As a solution to this problem, it is possible to set the use of every input device equipped in the computer as an inactive condition of the screen saver or any other power-saving device, but it is impossible to cope with a case where each computer is equipped with different input devices or where a new input device is invented.

The protective device for display devices by the present invention is purposed to solve the problem through activating a display burning preventive control or a power saving control only when display on the display device is truly not in need, and its structure is as described below.

### SUMMARY OF THE INVENTION

The protective device for a display device by the present invention is a protective device for a display device connected to a computer to display images, which comprises:
a detecting means for detection of no display updating state where an image displayed on said display device has not been rewritten for a predetermined period of time; and
a stop means for stopping the display of images on said display device, based on the detected results by said detecting means.

The display devices herein are not limited to CRT displays but effectively inclusive of LCDs and other display devices.

The detecting means may comprise:
a timing means for accumulative counting of time passage to operate for every predetermined period of time;
a reset means for resetting of timing by said timing means, which is prepared as a part of procedures to be called at the time of image display on said display device; and
a state detecting means for detection of said no-display-updating state when the timing by said timing means reaches the expiration of the predetermined period of time.

The display device may be such a type of display device as displays while being timed with horizontal synchronizing signal and vertical synchronizing signal, and
said stop means may be such a means as removes image signals and outputs horizontal synchronizing signal and vertical synchronizing signal only.

The protective method for a display device by the present invention for preventing the display device from being burned, said method comprises the steps of;
detecting rewriting of the data of an image displayed on said display device, and
carrying out a prescribed process for preventing said display device from being burned if said data has not been updated for predetermined period of time.

### BRIEF DESCRIPTION OF THE DRAWINGS

Figure 1 is a drawing showing the internal configuration of the computer 1 where a display protective device as an embodiment of the present invention is realized;
Figure 2 is a block diagram showing the internal configuration of the expansion graphic board 20 which constitutes the display protective device;
Figure 3 is an illustrative drawing showing a state of connection between the computer 1 which the expansion graphic board 20 is mounted on and the CRT display device 50;
Figure 4 is a flowchart showing the interrupt process routine;
Figure 5 is a flowchart showing the screen plotting process routine; and
Figure 6 is a flowchart showing the display stop process routine.

### DESCRIPTION OF THE EMBODIMENT

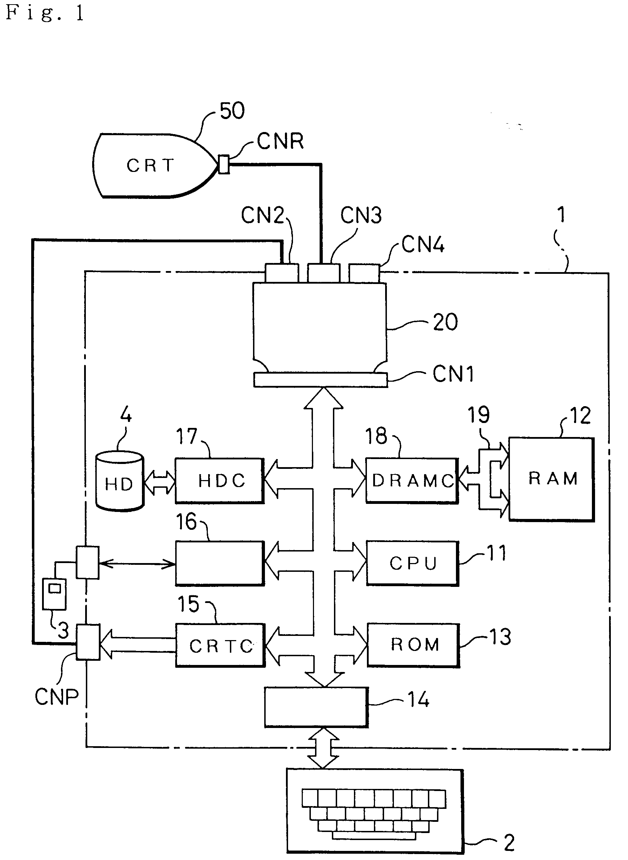

The following paragraphs describe a preferred embodiment of the present invention. The protective device for display devices as the embodiment consists of; a hardware which consists of an expansion graphic board 20 and a computer which the board is assembled in, and the processes operated in the hardware. As Figure 1 shows, the expansion graphic board 20, which is connected to a connector CN1 located in an expansion slot in the computer 1, enables the computer 1 to display images of higher resolution than the originally-equipped CRTC 15 does. The computer 1 is connected to a keyboard 2, a mouse 3 and a CRT 50 when it is in use and it is internally equipped with a hard disk (HD) 4. The computer 1 is equipped with a CPU 11, a RAM 12, a ROM 13, a keyboard interface 14, a CRTC 15, a mouse drive circuit 16, a hard disk controller (HDC) 17 to control the HD 4, a DRAM controller (DRAMC) 18 to control the mounted DRAM and an expansion slot which are well-known devices. These elemental devices and circuits are connected to each other by internal bus. The internal RAM 12 is connected to the DRAMC 18 via a memory bus 19.

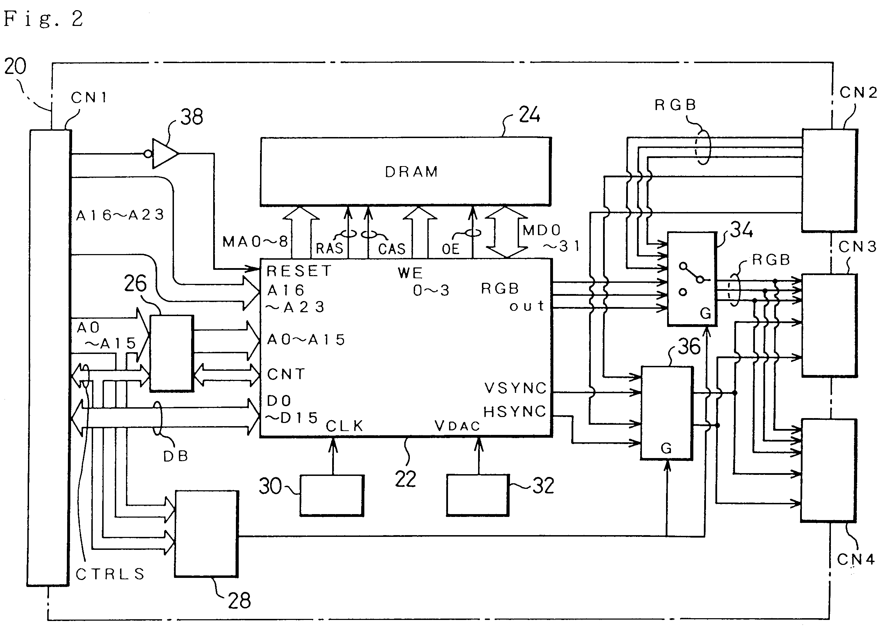

The expansion graphic board 20 is mounted inside the expansion slot of the computer and is electrically connected to the bus of the computer by a connector CN1. As Figure 2 shows, the expansion slot is connected to an address bus ADB, a data bus DB, a control signals bus CTRLS and so on to enable direct access from the CPU 11 internally mounted on the computer. The expansion graphic board 20 operates with the signals and power supplied by the computer.

The expansion graphic board 20 is equipped with a CRTC 22 which has a higher performance than the CRTC 15 of the main body of the computer 1, a high-speed DRAM 24 for image data development, a bus converter circuit 26 for bus interfacing with the computer 1, an address decoder 28 for video signal switching, a generator 30 for generation of reference clock CLK of the CRTC 22, a constant current circuit 32 for supply of a reference current for analog RGB to the CRTC 22, a 3-circuit microrelay 34 for RGB signals switching, a two-3-circuit data selector 36 for switching between horizontal synchronizing signal and vertical synchronizing signal, an inverter 38 for inverting reset signal from the computer so as to match the logic of the CRTC 22, and so on. The microrelay 34 switches between output of analog RGB signals which are input from an external device via a connector CN2 (normally, signals from the main body of the computer) and output of analog RGB signals from the CRTC 22.

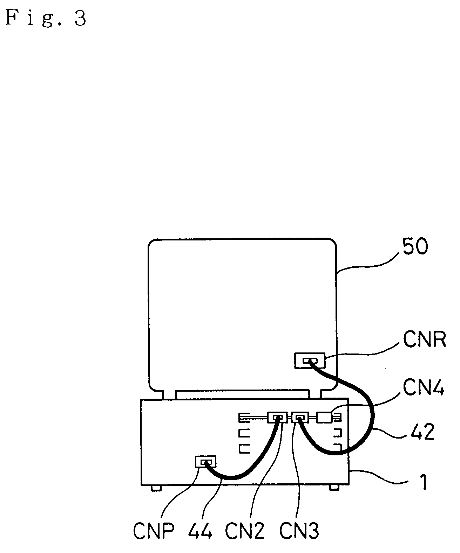

In the following paragraphs, analog RGB signals, horizontal synchronizing signal HSYNC and vertical synchronizing signal VSYNC are comprehensively referred to as graphic signals. For output of graphic signals, the expansion graphic board 20 in the embodiment is equipped with two connectors for the output CN3 and CN4 which have different pin arrays. Connections of these connectors are briefly described hereafter. As Figures 1 and 3 show, the expansion graphic board 20 is mounted inside the expansion slot built on the back side of the computer 1. The connectors CN2, CN3 and CN4 for the expansion graphic board 20 appear on the back side of the computer 1. The output connector CNP for the analog RGB, which is built in the computer 1, is directly connected to the input connector CNR for the CRT display device 50 before the expansion graphic board 20 is mounted. The output connectors CN3 and CN4 which have different pin arrays are equipped to facilitate connection to CRT display device of different specifications; therefore, equipment of the both connectors is not indispensable.

The CRT display device 50 adopted for the embodiment conforms to the Energy Star Computer Program. The CRT display device 50 is equipped with the three modes, "ON", "SUSPEND" and "OFF" and it operates as described below.

"ON": Both the horizontal synchronizing signal and the vertical synchronizing signal are "Pulses"; that is, the horizontal synchronizing signal is 10 KHz or higher and the vertical synchronizing signal is 40 Hz or higher. In this state, the CRT display device 50 carries out the normal image display. Any particular reduction in consumed power is not carried out.

"SUSPEND": The vertical synchronizing signal is "No Pulses"; that is, lower than 10 KHz and the horizontal synchronizing signal is "Pulses". In this state, the CRT display device 50 carries out no image display. Power is supplied only to the computer circuit inside the CRT display device 50 and to the heater for the CRT (cathode ray tube), and power supply for the high-voltage circuits, deflector circuits and so on, which consume a lot of power, is turned off to reduce the power consumption.

"OFF": Both the horizontal synchronising signal and the vertical synchronizing signal are "No Pulses"; that is, both the horizontal synchronizing signal and the vertical synchronizing signal are less than 10 KHz. In this state, the CRT display device 50 carries out no display. Turning off every power supply except the supply to the computer which controls this energy-saving operation, power consumption is achieved on a large scale.

As described later, adoption of CRT display devices corresponding to the Energy Star Computer Program is not indispensable to the establishment of the present invention, and ordinary CRT display devices may be used.

Connection of the CRT display device 50 is as described below. As Figure 3 shows, a connection cable 42 originally connecting the CRT display device 50 to the computer 1 is now connected not to the output connector CNP of the computer 1 but to the connector CN3 of the expansion graphic board 20. Besides this, another cable 44 connects the connector CNP of the computer 1 to the connector CN2 of the expansion graphic board 20. Consequently, when tee microrelay 34 and a data selector circuit 36 are driven, the conventional graphic signals output from the computer 1 and the graphic signals output from the expansion graphic board 20 can be output selectively to the CRT display device 50. The switching of the microrelay 34 and the data selector circuit 36 is carried out when a predetermined I/O address assigned to the expansion graphic board 20 is accessed. When this I/O address is accessed, the output from the address decoder 28 turns active and the signal output from the address decoder 28 drives the microrelay 34 and the data selector circuit 36. Therefore, if the computer 1 is provided with a program for accessing this I/O address, the display can be easily switched.

Internal connections of the expansion graphic board 20 are briefly described hereafter. The eight higher-order bits of the address bus on the side of the computer 1 (A0 through A23, a total of 24 bits) are respectively connected to the input addresses A16 through 23. The sixteen lower-order bits are connected to the bus converter circuit 26 where I/O addresses from the side of the computer 1 are converted. The sixteen lower-order bits are not directly connected to the CRTC 22 because the I/O addresses used by the CRTC 22 (completely defined) are overlapped with the addresses already defined on the said of the computer 1.

The sixteen lower-order bits and the control signals CTRLS are connected not only to the bus converter 26 but also to the address decoder 28. The address decoder 28 is a circuit where signals for driving the above-described microrelay 34 and the data selector circuit 36 are generated. The address decoder 28 switches the outputs when predetermined data from the computer 1 is written on the predetermined address.

The DRAM 24 has a storage capacity of 2 MB. The DRAM 24 is connected to the CRTC 22 by the address bus MA0 through MA8, signals RAS and CAS, a 4-bit write/enable signals WE0 through WE3, an output enable signal OE and 32-bit data bus MD0 through MD31.

As described above, the analog RGB signals, the horizontal synchronizing signal HSYNC and the vertical synchronizing signal VSYNC, which are output from the CRTC 22, are connected to the connectors CN3 and CN4 via the microrelay 34 and data selector circuit 36.

A VGA graphic controller CL-GD5428 manufactured by CIRRUS LOGIC is the chip adopted for the CRTC 22 of the embodiment. Besides the ordinary function as a CRTC, this single chip of CRTC 22 has almost all functions necessary for graphic control, such as interface circuit for the computer, graphic control function to process graphics, memory control function to control access to the memory, and pallet DAC function for analog RGB signals.

Especially, this CRTC 22 has a register called "Clocking Mode Register", and, if bit 5 of the register is turned active (value 1), the function called "Full Bandwidth" becomes effective. This function is equipped to enable the CRTC 22 to use an ordinary DRAM instead of a VRAM where two independent accesses, parallel writing and serial reading, are possible. When "Full Bandwidth" is turned active, CRTC 22 continues remitting horizontal synchronizing signal and vertical synchronizing signal but halts image memory reading and gives preference to image data writing. The image data writing by the CRTC 22 in this while enables writing and reading of image data simultaneously in a quasi manner. In this embodiment, the CRTC 22 utilizes this function and the details are described later.

The CRTC 22 is also equipped with various types of registers; when a value is written in a predetermined register, frequency of the dot clock, horizontal synchronizing signal and vertical synchronizing signal can be set to desired values. The frequency of the vertical synchronizing signal is not duly designed so as to be set to less than 10 Hz, and thus there may be a case, for example, where the frequencies of the dot clock and the horizontal synchronizing signal have to be set to within the range of the predetermined value if the frequency of the vertical synchronizing signal is set to less than 10 Hz. Since these relations are known in advance, what to be done is to write the values which satisfy the requirements respectively on the registers. Adjustment of the horizontal synchronizing signal and vertical synchronizing signal to predetermined values enables to operate the above-described functions of the CRT display device 50 which correspond to the Energy Star Computer Program.

The following paragraphs describe the display stop process in this embodiment. An operating system is installed in this computer 1 when it is started up. The operating system is a large one ("WINDOWS 3.1" by MicroSoft) where a variety of function calls are available and a BIOS is also equipped for their realization. Necessary processing operations, such as the image processing, are prescribed in the form of functions. These functions are wide ranged, inclusive of text processing and image processing. For example, when an application program draws a predetermined line or figure on the CRT display device 50, the functions provided by the operating system is always utilized. These functions themselves are prescribed on the system side.

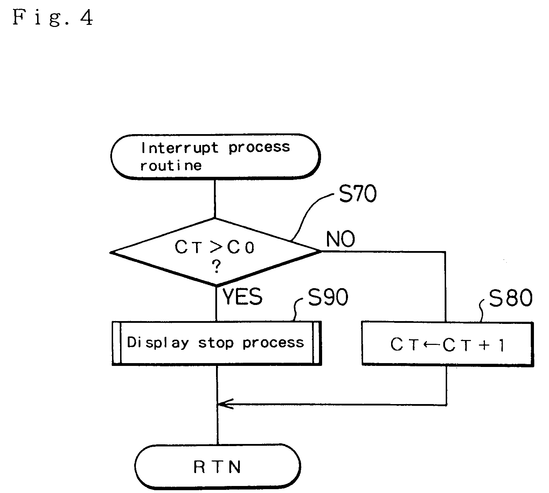

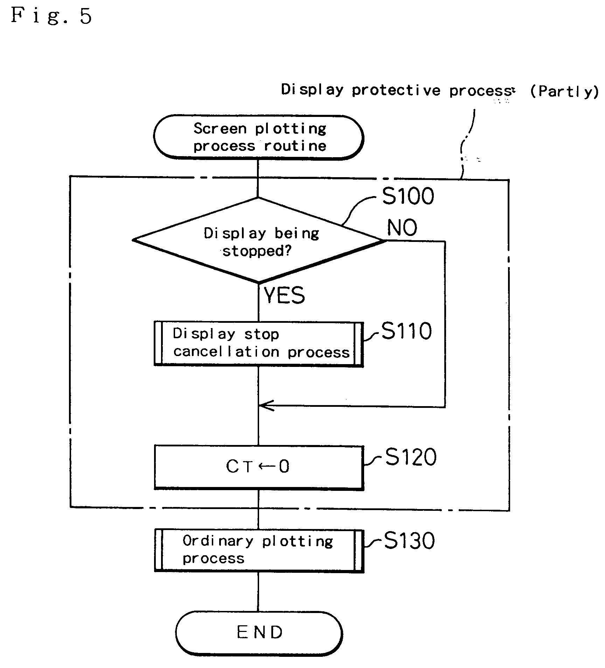

However, since a variety of devices are connected to the computer 1, it is necessary to operate flexibly with them and thus the programs to be required by each connectable device may be included as a device driver. In the computer 1 of the embodiment, a display driver fitting to the expansion graphic board 20 is built in together with a well-known front-end processor (FEP) and printer driver for inputting Japanese words. This display driver is an ordinary processing routine where the expansion graphic board 20 is utilized to display images, with addition of the display protective process. The operating system that operates in the computer 1 includes an interrupt process routine which is carried out at a prescribed intervals (Figure 4), as well as a variety of device drivers; and the screen plotting process routine, which is called when drawing on the screen of the CRT display device 50 (Figure 5), is provided in the form of a function.

Figure 4 is explained first. This interrupt process routine is started up repetitively at the intervals of some milliseconds and judges whether the values at a counter CT is larger than a predetermined value C0 (step S70). The counter CT is incremented inside the interrupt process routine (step S80), and it is reset to the value 0 when the screen plotting process routine shown in Figure 5 is called. That is, the counter CT has a value larger than the predetermined value C0 after the interrupt process routine is called for a predetermined number of times while the screen plotting process routine is not called. If the counter CT has a value C0 or less, counter CT is incremented by value 1 (step S80), and the interrupt process routine comes to an end as it is.

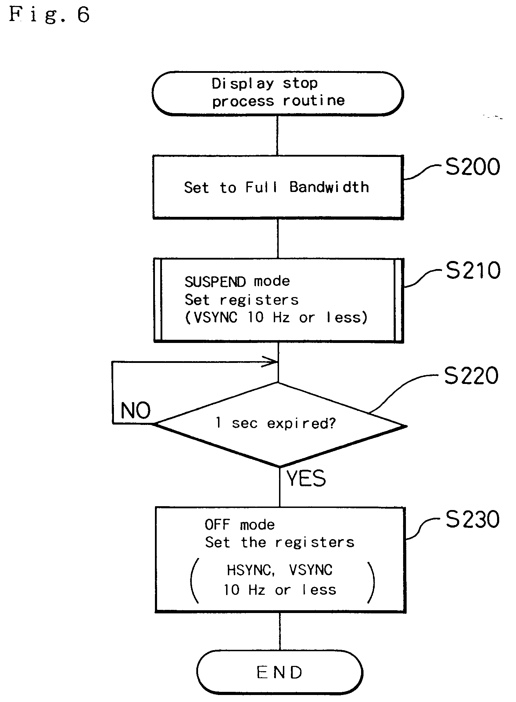

If the counter CT has a value larger than the predetermined value C0, a process to stop display on the CRT display device 50 is carried out (step S90). The display stop process is described later in detail with use of Figure 6.

The counter CT is reset to value 0 when the screen plotting process routine is called. The screen plotting process routine showed in Figure 5 is carried out when the CPU 11, rewriting a certain screen according to an application program or such in operation, calls the screen plotting process routine as one of the available functions specified by the operating system. In this routine, the process added as a display protective process is carried out first and whether display is stopped or not is judged to begin with (step S100). If any display is not stopped, step S110 is skipped and the process of resetting the counter CT to value 0 is carried out (step S120), and then ordinary plotting process to be carried out originally is carried out (step S130). If no display protective process is available, the function for the screen plotting process is called and, when the routine in Figure 5 is started up, ordinary plotting process (step S130) is carried out while steps S100 through 120 are not carried out.

If display on the CRT display device 50 is actually stopped because later-described display stop process is carried out due to the value on the counter CT exceeding the predetermined value C0 (step S100), the process of cancelling the stop of display is carried out because the function for the screen plotting process is called (step S110). And then, the counter CT is reset as described above (step S120) and ordinary plotting process is carried out (step S130), this routine comes to an end.

If no plotting is carried out on the screen for a certain period of time (till CT>C0) in the screen plotting process routine due to the interrupt process routine showed in figure 4 and the screen plotting process routine showed in Figure 5, a process to stop image display on the CRT display device 50 is carried out, and then the process of cancelling the stop of display is carried out immediately if the screen plotting process routine is called.

As showed in Figure 6, the first step of the process of stopping the display on the CRT display device 50 is the process of setting the CRTC 22 to "Full Bandwidth" at the expansion graphic board 20 (step S200). Next, the CRTC 22 is set to the SUSPEND mode (step S210) and, after waiting for expiration of one second (step S220), the process of setting the CRTC 22 to the OFF mode is carried out (step S230). Through these processes, image display on the CRT display device 50 is fully stopped. Each of the processes is described in detail in the following paragraphs.

The process of setting to "Full Bandwidth" is actually a process to write value 1 at bit 5 of the register called "Clocking Mode Register" located in the CRTC 22. If value 1 is written at this bit of the register, the CRTC 22 outputs horizontal synchronizing signal and vertical synchronizing signal at normal timing but it carries out no reading of actual data from the DRAM 24. As the result, only synchronizing signal are output to the CRT display device 50; and thus burning on the CRT display device 50 and so on are prevented, but no reduction in power consumption at the CRT display device 50 is achieved.

The process of setting to the SUSPEND mode is actually a process to set predetermined values at the registers located in the CRTC 22. The CRTC 22 has registers to set frequencies of a dot clock, horizontal synchronizing signal, vertical synchronizing signal and so on; and , if the values determined in advance are written on them, the frequency of the vertical synchronizing signal is made 10 Hz or less. Not only the value of the register to set the frequency of the vertical synchronizing signal is rewritten here, but the values of the registers to set the frequencies of the dot clock and the horizontal synchronizing signal are also rewritten. These operations are required because the frequencies 10 Hz or less are not used in normal use and because it is difficult to reduce the frequency of the vertical synchronizing signal to 10 Hz or less only by adjusting the value at the register for the vertical synchronizing signal in CRTC 22 which is not designed to the standards of the Energy Star Computer Program. Of course, if a CRTC designed to the standards of Energy Star Computer Program is adopted, the frequency of the vertical synchronizing signal can be made desired one by changing the value of one register. If the frequency of the vertical synchronizing signal is made 10 Hz or less, the CRT display device 50, as described above, turns power off except the supply to the heater for the CRT (cathode ray tube) and so on, and thus power consumption is reduced.

The process of setting to the OFF mode is to write predetermined values at the registers to set frequencies of a dot clock, horizontal synchronizing signal, vertical synchronizing signal and so on, in the same way as the process of setting to the SUSPEND mode, and thus the frequencies of the horizontal synchronising signal and the vertical synchronizing signal are made 10 Hz or less. If the frequency of the horizontal synchronizing signal and the vertical synchronizing signal are made 10 Hz or less, the CRT display device 50, as described above, turns off power supply to most of the circuits except the supply to the heater for the CRT (cathode ray tube) and so on, and thus power consumption is reduced as far as possible.

In the embodiment, a predetermined wait time (1 second) is inserted between the switching from the SUSPEND mode to the OFF mode. This time is necessary for the internals of the expansion graphic board 20 and the CRT display device 50 in the embodiment to correspond to the switching of the modes, and a system of different configurations requires no or a different duration of time. In the example showed in Figure 6, this wait time is counted by the loop inside the display stop process routine (step S220), but it may be counted, once the interrupt process routine (Figure 4) is concluded for the expiration of 1 second, by the start up of the interrupt process routine which is repetitively started up. It is also possible to time by setting an internal timer.

As described above, the display protective device in this embodiment stops display on the CRT display device 50 or switches to power-saving mode not when the input devices, such as the keyboard 2 and the mouse 3, are in the state of no use for a predetermined duration of time, but when the screen plotting process routine is not called for a predetermined duration of time. Therefore, neither a screen burning preventive function (screen saver) operates nor the CRT display device 50 shifts to the power-saving mode in such use as there is no input from the keyboard 2 or the like for the predetermined duration of time but the screen is rewritten continuously, a case such as installation of a software, re-computation of a large table or computation of a three-dimensional software.

Since the condition (CT>C0) is judged to be established after the screen has not been rewritten for the predetermined duration of time, the screen burning preventive function (screen saver) operates or the CRT display device 50 shifts to the power-saving mode only when the CRT display device 50 is essentially not in use.

The above paragraphs have described the embodiment of the present invention; however, the invention is not confined to such embodiment but embodiments in a number of variations of an equal structure are possible without departing from the scope of invention. Some examples of other possible structures are a structure where the display device is a display device other than CRT (LCD, for example) or where the display stop process and the function for the screen plotting process according to the provisions of the operating system are completely separated, a structure where it is not in the form of the expansion graphic board but built in the computer 1 as an integral part, a structure where the CRT display device does not have a power-saving mode, and so on.

## Claims

1. A protective device for a display device connected to a computer to display images, which comprises:
a detecting means for detection of no display updating state where an image displayed on said display device has not been rewritten for a predetermined period of time; and
a stop means for stopping the display of images on said display device, based on the detected results by said detecting means.

2. A protective device for a display device in accordance with Claim 1, wherein said detecting means comprises:
a timing means for accumulative counting of time passage to operate for every predetermined period of time;
a reset means for resetting of timing by said timing means, which is prepared as a part of procedures to be called at the time of image display on said display device; and
a state detecting means for detection of said no-display-updating state when the timing by said timing means reaches the expiration of the predetermined period of time.

3. A protective device for a display device in accordance with Claim 1; wherein
said display device is such a type of display device as displays while being timed with horizontal synchronizing signal and vertical synchronizing signal, and
said stop means is a means as removes image signals and outputs horizontal synchronizing signal and vertical synchronizing signal only.

4. A protective device for a display device in accordance with Claim 1; of which circuit for display which carries out display of said display device is mounted in an expansion slot which is connected to the computer bus,
said circuit for display comprises a register for clearing the images to be displayed, and
said stop means is a means for writing the image clearance data at said register.

5. A protective device for a display device in accordance with Claim 3, wherein said stop means is a means for controlling the brightness signal for said display device to be under the predetermined reference value.

6. A computer system which comprises a protective device for a display device in accordance with Claim 1 and a display device; and
said display device is a display device for changing the power consumption according to the frequency of a synchronizing signal, and
said stop means is a means for controlling the frequency of said synchronizing signal under the predetermined value.

7. A protective method for preventing a display device from being burned, said method comprises the steps of;
detecting rewriting of the data of an image displayed on said display device, and
carrying out a prescribed process for preventing said display device from being burned if said data has not been updated for predetermined period of time.
